# EUROPEAN PATENT APPLICATION

(11) **EP 4 847 909 A1**
(43) Date of publication of application: **02.12.2026**
(21) Application number: 26181511.2
(22) Date of filing: 28.05.2026
(51) Int. Cl.: G01N 23/04, G01T 1/20, G21K 7/00

(54) **X-RAY IMAGE DETECTION SYSTEM WITH SUBIMAGERS AND COMPOSITE IMAGE GENERATION**

(30) Priority: 28.05.2025 US 202519221061
(71) Applicant: Carl Zeiss X-Ray Microscopy, Inc., Dublin, California 94568 (US)
(72) Inventor: XU, Shiqi, Dublin, CA 94568 (US); ANDREW, Matthew, Dublin, CA 94568 (US); TKACHUK, Andrei, Dublin, CA 94568 (US)
(74) Representative: Gulde & Partner

(57) **Abstract**

An X-ray image detection system (122) includes a scintillator (210) configured to convert received X-rays (105) into visible or near-visible light. Multiple subimagers (212) collectively capture the scintillator's output, with each subimager imaging only a portion of the scintillator. Each subimager includes an optical element -such as an imaging lens or tapered fiber optic plate- and an image sensor (214). Adjacent subimagers have partially overlapping fields of view to ensure complete coverage of the scintillator. The subimagers can be mounted on a common support structure and synchronized to capture images simultaneously. Methods of capturing and assembling X-ray images using the described system are also disclosed.

## Description

### FIELD OF THE DISCLOSURE

Embodiments of the present disclosure relate to the field of X-ray image detection.

### TECHNOLOGICAL BACKGROUND

X-ray microscopy is an imaging technique that allows for the visualization of a sample's internal structure without the need for destructive sectioning. This technique uses X-rays to create high-resolution images or projections of the sample. These images can be used to study the internal structures of a wide range of materials, from biological tissues to geological samples to man-made materials.

In an X-ray microscope, the sample is illuminated with an X-ray beam, and the transmitted X-rays are captured to form the projection. The X-ray beam is often produced by a synchrotron X-ray source or a laboratory X-ray source. The beam can be conditioned to suppress unwanted energies or wavelengths of radiation to ensure high-quality imaging in many cases. As the X-ray beam passes through the sample, its intensity and phase are modulated according to the sample's internal structure and composition. This modulated beam is then detected by an X-ray image detection system, which converts the X-rays into a digital image that can be analyzed.

In some systems, the sample is rotated in the beam and images are taken at different rotation angles. This enables computed tomographic reconstruction that transforms the collected X-ray projections into a three-dimensional representation of the sample.

There are two primary types of X-ray image detection systems that can be employed in X-ray microscopy systems. The first category includes direct X-ray detection systems. X-ray photons are directly converted into an electrical signal. For example, the detector material in a direct system might be a semiconductor layer, such as silicon, cadmium telluride (CdTe), or selenium, which absorbs the X-ray photons and generates electron-hole pairs in proportion to the incident radiation intensity. These charge carriers are subsequently collected and measured. One measurement approach utilizes a liquid crystal light value, see U.S. Pat. No. 12,130,392, by Xiaochao Xu and Christoph Graf Vom Hagen, while another approach employs a light emitting layer such as organic light emitting diode or GaAs or AlGaAs to convert the charge carriers from the direct conversion semiconductor material. Because they directly detect the X-rays, these systems tend to be highly sensitive and can offer efficient X-ray absorption, especially at higher energies.

A consequence of this high sensitivity in direct detection systems is that they typically utilize larger-sized detector pixels. The physical properties required to efficiently convert higher-energy photons into electrical signals place constraints on the underlying semiconductor layer thickness, geometry, and fabrication methods. As a result, these direct X-ray detectors generally exhibit pixel sizes that are not well suited for high-resolution imaging, particularly in X-ray microscopy setups where very fine spatial detail is desired. Although direct detectors have demonstrated significant advantages in situations requiring high sensitivity or operating at higher X-ray energies, their relatively large pixel sizes limit their usefulness in microscopy applications where resolution on the sub-micron or nanometer scale may be essential.

In contrast, as the second category, indirect X-ray image detection systems may convert the incoming X-rays to visible light before the image is recorded. In a typical indirect detection system, a scintillator, such as a doped cesium iodide (CsI) or gadolinium oxysulfide (Gd2O2S), is used to absorb the X-ray photons and re-emit them as visible light photons. This visible light image is then relayed, for example via optical components such as lenses or fiber-optic plates, onto a visible-light camera sensor, such as a charge-coupled device (CCD) or a complementary metal-oxide-semiconductor (CMOS) image sensor.

The advantage of indirect X-ray detection for high-resolution microscopy lies in the ability to tailor the optical path to achieve smaller effective pixel sizes at the sensor plane. By carefully selecting the scintillator thickness, optical coupling geometry, and the properties of the camera sensor, it is possible to obtain a finer spatial sampling of the X-ray image. Consequently, indirect detection systems can support high-resolution imaging better than most current direct detection technologies. However, because the X-ray signal must first be converted into visible light before detection, indirect detection systems may introduce additional complexities, such as increased noise from the scintillator or limitations on dynamic range due to the characteristics of the camera sensor and the optical coupling elements.

These two approaches - direct detection and indirect detection - therefore represent distinct trade-offs in performance for X-ray microscopy. Direct detection systems are characterized by high sensitivity and high quantum efficiency for X-ray absorption but are limited in achievable resolution due to larger pixel sizes. Indirect systems, by contrast, can offer more flexible and higher spatial resolution, though they may come with reduced sensitivity, more complex optical paths, and the potential for increased imaging artifacts. Consequently, selecting the most suitable detection method often depends on the specific imaging requirements, including target resolution, X-ray energy range, and desired signal-to-noise characteristics.

One particularly high resolution indirect X-ray image detection system is described in U.S. Pat. No. 7,400,704 to Wenbing Yun, et al. The incoming X-ray beam is received by a scintillator and the light from the scintillator is then magnified by a visible light magnification lens system including a magnification lens and two couplets. A final tube lens couplet forms an image on a CCD image sensor. This basic architecture has been used in many of the highest performance systems.

Sporea, Dan, et al. in "Multidisciplinary evaluation of X-ray optical fiber sensors." Sensors and Actuators A: Physical 213 (2014): 79-88, describe a related indirect X-ray image detection system architecture using extrinsic optical fiber sensors in which phosphor materials are optically coupled to the end of a plastic optical fiber. These can be formed into fiber optic plate and tapered to couple to image sensors.

### GENERAL SUMMARY

In view of the foregoing, the present disclosure provides an X-ray image detection system and method that addresses the challenges associated with achieving both high resolution and a large field of view using conventional imaging approaches, including single-lens. Traditional direct or indirect X-ray detectors often employ a single lens and a single, large-pixel-count image sensor, which can be prohibitively expensive, difficult to manufacture, and limited in performance. The present disclosure overcomes these limitations by dividing the overall image capture task among multiple image sensors, each paired with a lens or fiber optic plate or other collection system. The multiple image sensors and respective collection systems may, for instance, be operated in synchronization and/or have (at least somewhat) overlapping fields of view.

According to one aspect of the present disclosure, an indirect X-ray detection system employs a scintillator to convert incident X-rays into light. According to the aspect of the present disclosure, an array of subimagers is provided, wherein each subimager includes a lens or other optical element(s) and an image sensor. These subimagers are arranged such that they collectively capture the entire field of view (FOV) of the scintillator at high resolution. Each subimager needs only to handle a sub-FOV of the scintillator's output image reduced with respect to the entire FOV, allowing each lens and sensor combination to be more modest in size relative to a single, monolithic solution.

In certain preferred embodiments, the subimagers are mounted on a common support structure or rack, which can be implemented as a low-cost printed circuit board or frame. This design leverages the cost and availability advantages of smaller lens systems and smaller image sensors - both of which are readily sourced from well-established consumer and industrial imaging markets. By distributing the imaging task across multiple subimagers, the total pixel count needed to capture the entire scintillator output is achieved in aggregate, while each individual sensor operates within manageable and cost-effective size, resolution, data throughput and/or optical constraints.

According to one aspect of the disclosure, an X-ray image detection system includes a scintillator configured to receive X-rays and convert the received X-rays into light. The X-ray image detection system includes a plurality of subimagers. Each subimager comprises an optical element configured to relay the light from a respective sub-field of view (SFOV) of the scintillator and an image sensor arranged to capture an optical image relayed by the optical element. A plurality of subimagers is configured to collectively image the scintillator, wherein each subimager is configured to capture a portion of the scintillator output.

The portion may be the scintillator output or a subregion of the scintillator output not covering the entire scintillator output. In other words, each subimager may capture the entire FOV of the scintillator or an SFOV not covering the entire FOV. The plurality of subimagers collectively captures the entire FOV of the scintillator.

In an embodiment, adjacent sub-fields of view of the subimagers overlap at least partially, for example by less than 10% of each subimager's pixel array, such as by between 5 and 10%of the (sub-)FOV, to ensure continuous imaging of the scintillator surface without capturing a too large fraction of the entire scintillator FOV by more than one subimager. Adjacent sub-fields of view are the respective sub-fields of view of adjacent subimagers.

In various embodiments, each optical element may include an imaging lens and/or a tapered fiber optic plate.

In some configurations, the scintillator comprises a curved scintillator surface that is generally aligned perpendicular to incoming X-rays, enhancing imaging resolution and efficiency. According to an embodiment of the disclosure, each subimager may be oriented such that it has an optical axis perpendicular to the scintillator surface at the respective sub-field of view.

Certain embodiments may include a primary objective lens configured to relay the scintillator image to the plurality of subimagers, providing enhanced imaging quality suitable for high-resolution microscopy.

According to an embodiment, the system may include a synchronizer configured to simultaneously trigger image capture by all subimagers and to sequentially read out the captured sub-images, i.e. the images captured by respective subimagers. The synchronized acquisition of the sub-images enables to image the imaged object at the same time. The sequential read-out enables to read-out all sub-images with a moderate read-out rate, requiring less capacities regarding data transfer and data evaluation, while still acquiring the entire image synchronously.

In an embodiment, each image sensor may include a pixel array of at least 1000 pixels along each axis, for instance at least 3000 pixels along an or each axis.

According to an embodiment, the overlap between adjacent sub-fields of view may be less than 10% of each subimager's pixel array.

In an embodiment, the subimagers may be mounted on a common support structure that might include a printed circuit board, facilitating alignment, stability, and ease of maintenance.

An aspect of the present disclosure relates to an X-ray microscopy system including an X-ray image detection system according to aspects and/or embodiments of the present disclosure. Providing said X-ray microscopy system transfers the technical effects of the X-ray image detection system of the present disclosure to the acquisition of X-ray microscopy imaging.

The disclosure further includes methods of capturing an X-ray image, comprising receiving X-rays on a scintillator to generate light. In other words, in the method of the present disclosure, X-rays are received by the scintillator and, in response thereto, light is emitted by said scintillator, preferably visible light. The method further comprises imaging the scintillator output, e.g., the light emitted by the scintillator, using a plurality of subimagers. Each subimager captures a respective portion of the scintillator's output (scintillator output image) through an (respective) optical element onto an (respective) image sensor as a subimage. Captured subimages from the (plurality of) subimagers are then assembled or stitched into a composite image covering the entire scintillator.

In an embodiment, adjacent subimages may overlap at least partially.

According to an embodiment, capturing images from each subimager may be synchronized such that the subimages are captured simultaneously. In other words, the subimages captured from the plurality of subimagers may be triggered to be captured at the same time.

In an embodiment, the assembling process of the subimages may involve stitching the captured subimages together and removing overlapping portions between adjacent subimages.

In additional embodiments, imaging the scintillator output may include relaying the scintillator output (image) through imaging lenses or tapered fiber optic plates associated with each subimager. In other words, each subimage captured by a subimager may be relayed through a respective imaging lens or a respective tapered fiber optic plate associated with the according subimager.

According to an embodiment, the scintillator may be positioned to have a curved surface generally perpendicular to incoming X-rays, and/or each subimager may be aligned perpendicular to the scintillator surface at its respective portion. In other words, a method according to an embodiment may include positioning the scintillator to have a curved surface generally perpendicular to incoming X-rays and aligning each subimager perpendicular to the scintillator surface at the subimager's respective portion of the scintillator.

In an embodiment, subimages may be captured with sensors having pixel pitches between about 1 and 3 micrometers, for instance 2 micrometers.

According to an embodiment, a primary objective lens may be used to relay the scintillator image to the subimagers, thereby enabling high-resolution imaging suitable for microscopy applications. In other words, the imaging may further comprise relaying the scintillator output (image) to the subimagers through a primary objective lens configured for high-resolution imaging.

To ensure overlapping FOV, the lens used for sub-imager may have slightly less than 1 magnification. To match pixel resolution (worse than 1-3µm) with optical resolution, the camera lens should have f# of 2-5, where the f#, also referred to as f-number, is a dimensionless number that describes the aperture size of a lens relative to its focal length. (note f# is used to describe camera lens, while NA, the numerical aperture, is used to describe objective lens. In general f# is inversely proportionally to NA, therefore a smaller f# corresponds to a higher resolution.) Embodiments of the present disclosure may include an f-number of f# = 2-5 for the desired FOV. In an example, a FOV of 4 mm is achieved by a 2µm pixel size and 2000 pixels in the corresponding dimension (e.g., 2µm pixel size, 2000x2000 pixel number -> 4mm FOV).

The disclosure can thus enable high-resolution X-ray imaging over large areas at reduced cost and complexity compared to conventional single-sensor solutions. The use of multiple smaller lenses or collection systems also offers flexibility in optical design, permitting the selection and optimization of lens parameters for each subimager according to the local portion of the scintillator being imaged.

Additionally, by synchronizing the subimagers' exposure and readout, the system can provide real-time or near-real-time imaging performance, as well as facilitate advanced techniques such as tomographic reconstruction.

Through this innovative partitioning of the detection architecture, the present disclosure can offer an efficient, scalable, and economically feasible approach to large-area, high-resolution X-ray microscopy. Each subimager may be independently serviced or replaced, and the scalability of the design allows the overall imaging resolution and field of view to be tailored to diverse application requirements - from research laboratories needing extreme detail to industrial settings requiring broad, reliable coverage.

The above and other features of the disclosure including various novel details of construction and combinations of parts, and other advantages, will now be more particularly described with reference to the accompanying drawings and pointed out in the claims. It will be understood that the particular method and device embodying the disclosure are shown by way of illustration and not as a limitation of the disclosure. The principles and features of this disclosure may be employed in various and numerous embodiments without departing from the scope of the disclosure.

### BRIEF DESCRIPTION OF THE DRAWINGS

In the accompanying drawings, reference characters refer to the same parts throughout the different views. The drawings are not necessarily to scale; emphasis has instead been placed upon illustrating the principles of the disclosure. Of the drawings:
Fig. 1 is a schematic diagram of an X-ray Microscopy (XRM) computed tomography (CT) system including an X-ray image detection system comprising several sub-imagers according to the present disclosure;
Fig. 2A is a schematic side view of an X-ray image detection system comprising several sub-imagers configured to capture the optical image formed on a scintillator for a parallel beam configuration, according to the present disclosure;
Fig. 2B is a schematic side view of an X-ray image detection system comprising several sub-imagers configured to capture the optical image formed on a scintillator for a cone beam configuration, according to the present disclosure;
Fig. 2C is a schematic view along the optical axis of an X-ray image detection system showing how several sub-imagers are tiled to image various two dimensional regions of the scintillator;
Fig. 3A is a schematic side view showing two adjacent sub-imagers of an X-ray image detection system including their imaging lenses and image sensors for a parallel beam configuration, according to the present disclosure;
Fig. 3B is a schematic side view showing two adjacent sub-imagers of an X-ray image detection system including their imaging lenses and image sensors for a cone beam configuration, according to the present disclosure;
Fig. 4A is a schematic side view showing two adjacent sub-imagers of an X-ray image detection system including tapered fiber optic plates and image sensors for a parallel beam configuration, according to the present disclosure;
Fig. 4B is a schematic side view showing two adjacent sub-imagers of an X-ray image detection system including tapered fiber optic plates and image sensors for a cone beam configuration, according to the present disclosure;
Fig. 5A and 5B are schematic side views showing several adjacent sub-imagers including their imaging lenses and image sensors for cone beam configuration showing improvements associated with aligning the subimagers along the respective local rays of the beam;
Fig. 6A is a schematic side view showing two adjacent sub-imagers including their imaging lenses and image sensors for a parallel beam configuration of an X-ray image detection system further including a large primary objective between the scintillator and sub-imagers for a planar imaging plane; and
Fig. 6B is a schematic side view showing two adjacent sub-imagers including their imaging lenses and image sensors for a parallel beam configuration of an X-ray image detection system further including a large primary objective between the scintillator and sub-imagers for a spherical imaging plane; and
Fig. 7 is a flow diagram showing a method for capturing images from subimagers and stitching the images into a composite image.

### DETAILED DESCRIPTION OF THE DRAWINGS

The disclosure now will be described more fully hereinafter with reference to the accompanying drawings, in which illustrative embodiments of the disclosure are shown. This disclosure may, however, be embodied in many different forms and should not be construed as limited to the embodiments set forth herein; rather, these embodiments are provided so that this disclosure will be thorough and complete, and will fully convey the scope of the disclosure to those skilled in the art.

As used herein, the term "and/or" includes any and all combinations of one or more of the associated listed items. Also, all conjunctions used are to be understood in the most inclusive sense possible. Thus, the word "or" should be understood as having the definition of a logical "or" rather than that of a logical "exclusive or" unless the context clearly necessitates otherwise. Further, the singular forms and the articles "a", "an" and "the" are intended to include the plural forms as well, unless expressly stated otherwise. It will be further understood that the terms: includes, comprises, including and/or comprising, when used in this specification, specify the presence of stated features, integers, steps, operations, elements, and/or components, but do not preclude the presence or addition of one or more other features, integers, steps, operations, elements, components, and/or groups thereof. Further, it will be understood that when an element, including component or subsystem, is referred to and/or shown as being connected or coupled to another element, it can be directly connected or coupled to the other element or intervening elements may be present.

It will be understood that although terms such as "first" and "second" are used herein to describe various elements, these elements should not be limited by these terms. These terms are only used to distinguish one element from another element. Thus, an element discussed below could be termed a second element, and similarly, a second element may be termed a first element without departing from the teachings of the present disclosure.

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

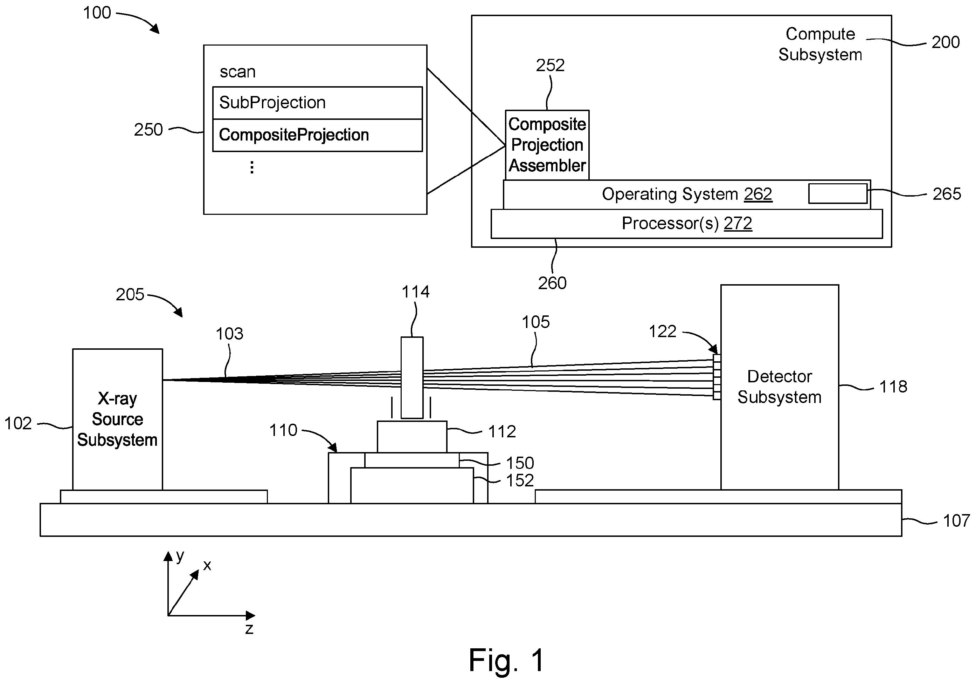

Fig. 1 is a schematic diagram of X-ray microscopy (XRM) system 100 to which the present invention is applicable.

The XRM system 100 includes an X-ray microscope 205 and a computer or compute subsystem 200.

The illustrated X-ray microscope 205 is an X-ray CT system. An X-ray source subsystem 102 generates a polychromatic X-ray beam 103, in one example. An object stage subsystem 110 with object holder 112 holds a sample or object of interest 114 in the beam and positions and repositions it to enable imaging or scanning of the object of interest 114 in the stationary beam 103 thereby enabling computer tomography (CT). A detector or detection subsystem 118 detects the beam 105 after it has been modulated by the object of interest 114. A base, such as a platform or optics table 107, provides a stable foundation for the microscopy system 100 and its subsystems.

The object stage subsystem 110 includes compound linear and rotation stages. The illustrated example has a precision 3-axis compound stage 150 that is configured to translate and position the object of interest 114 along the x, y, and z axes, very precisely but only over relatively small ranges of travel. This allows a region of interest of the object 114 to be located within the beam 103. The 3-axis compound stage 150 is mounted on a theta stage 152 that is configured to rotate the 3-axis compound stage 150 and thus object of interest 114 in the beam 103 around the y-axis. The theta stage 152 is in turn mounted on the base 107.

The illustrated source subsystem 102 is a "laboratory X-ray source" or other polychromatic source of X-rays generating a cone-shaped beam.

As used herein, a "laboratory X-ray source" is any suitable source of X-rays. Laboratory X-ray source 102 can be an X-ray tube, in which electrons are accelerated in a vacuum by an electric field and shot into a target piece of metal, with X-rays being emitted as the electrons decelerate in the metal. Typically, such sources produce a cone shaped beam containing a continuous spectrum of background X-rays combined with sharp peaks in intensity at certain energies that derive from the characteristic lines of the selected target, depending on the type of metal target used.

In one example, source subsystem 102 is a rotating anode (reflection target) type or microfocused source, with a Tungsten target. Targets that include Molybdenum, Gold, Platinum, Silver or Copper also can be employed. Preferably a transmission target configuration is used in which the electron beam strikes the thin target from one side. The X-rays emitted from the other side of the target are used as the beam 103.

The disclosure is also relevant to X-ray microscopy (XRM) systems employing other types of sources, however. For example, in other examples, the source subsystem 102 may be a synchrotron or similar source, which may produce more collimated, parallel beams and/or a narrower spectral content or bandwidth. Optical devices may collimate and/or narrow and/or monochromatize an X-ray beam from any X-ray source. The type of X-ray source does not need to be specified in the present disclosure.

When the object 114 is exposed to the X-ray beam 103, the X-ray photons, which propagate through the object of interest 114, form a modulated beam 105 that is received by the detection subsystem 118.

A magnified projection image of the object 114 is formed on the detection subsystem 118. According to the disclosure, the detection subsystem 118 includes an X-ray image detection system 122 that includes an array of subimagers that collectively detect the X-rays 105 across the field of view of the X-ray image detection system 122.

The operation of the microscopy system 100 and the scanning of the object 114 is controlled by the computer subsystem 200 that includes one or more processors 272 and memory 265.

The computer subsystem 200 also has data storage resources 250 such as disc or solid-state drives, and dynamic memory 265. The one or more processors 272 execute an operating system 262 and various applications run on that operating system 262 to allow for operation of the microscopy system 100.

According to aspects of the present disclosure, a composite projection assembler application 252 runs on the one or more processors 272. It processes a received set of subprojections (SubProjections), each generated by a different one of the subimagers of the X-ray image detection system 122. The composite projection assembler application 252 assembles the subprojections into a composite projection (CompositeProjection) by stitching the subprojections together and removing any overlapping portions between adjacent subprojections. Removing overlapping portions within the present disclosure does not literally mean that overlapping portions between adjacent subprojections removed entirely. Portions of each subprojection forming an overlapping portion with another subprojection are only removed for one of the subprojections, such that (the other) one subprojection remains in the composite projection for each overlapping portion.

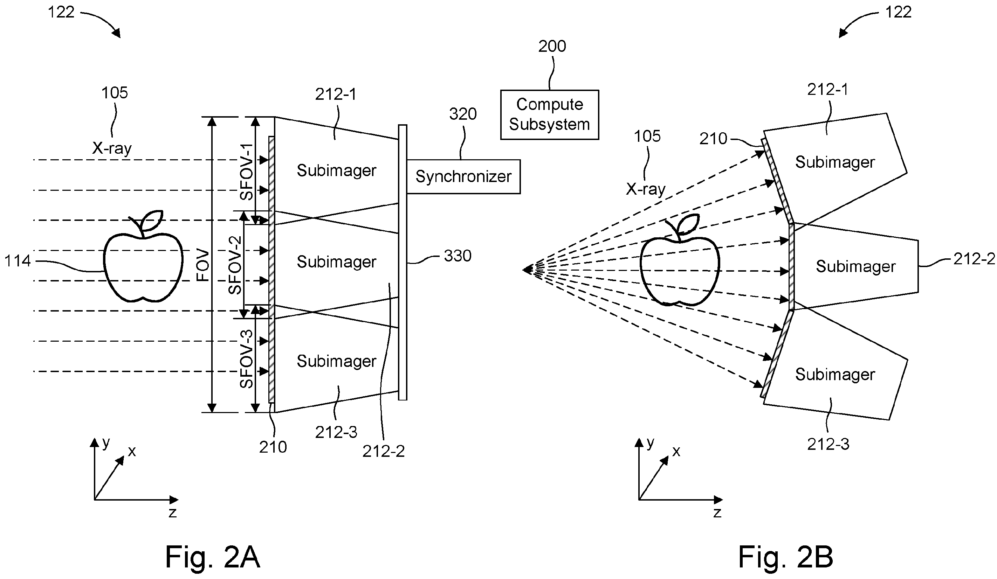

Fig. 2A schematically shows an embodiment of an arrangement of the subimagers 212 of an X-ray image detection system 122. This embodiment is configured for a parallel beam configuration, for example of X-rays generated by a synchrotron or collimated X-rays from any X-ray source.

In more detail, as described previously, the incoming X-rays 105, modulated by the sample or object of interest 114, are received in a scintillator 210. A scintillator operates by absorbing incoming X-ray photons and converting them into visible or near-visible light through a luminescent process. Specifically, when the high-energy X-ray photons strike the scintillator material, such as doped cesium iodide (CsI) or gadolinium oxysulfide (Gd2O2S), they excite the atoms or molecules within that medium. As the excited species return to their ground state, they emit photons in the visible spectrum. The extent of the scintillator 210 generally describes the field of view (FOV) of the system. In Fig. 2A, the FOV is depicted in the y direction.

The visible light emitted from the scintillator 210 is then collected by a series of subimagers 212 that function collectively to capture the image formed on the scintillator 210. In the illustrated example, three subimagers 212-1, 212-2, 212-3 are explicitly shown. Preferably, the sub imagers are tiled both vertically (along the y direction) as shown and also along the axis extending into the page (along the x direction) to form a two-dimensional array of subimagers 212 to capture the image generated in the scintillator 210.

Each of the subimagers 212 has a corresponding sub field of view SFOV, such that subimagers 212-1, 212-2, 212-3 have corresponding sub fields of view SFOV-1, SFOV-2, SFOV-3. In the preferred embodiment, the sub fields of view SFOV-1, SFOV-2, SFOV-3 overlap one another. That is, adjacent sub fields of view (sub fields of view of adjacent subimagers 212) overlap. In this way, the entire surface of the scintillator 210 is guaranteed to be imaged, albeit with some redundancy. The cost of such a system, e.g. regarding size of optical devices, data transfer, exchange of single components and many more, is reduced while maintaining or even improving spatial resolution of the entire captured image.

In the embodiment of Fig. 2A, a synchronizer 320 functions to collectively control the array of sub imagers 212. Specifically, the synchronizer 320 generates a shutter signal to the sub imagers 212 that cause them to capture an image simultaneously. Then, the synchronizer 320 successively reads out the subimages or subprojections from the sub imagers 212 and passes these separate subprojections to the compute subsystem 200 for storage in the data storage resources 250 and composite projection assembly. This allows for an image acquisition by all subimagers, i.e. of all subimages, at the same time.

In the illustrated embodiment, the subimagers 212 are attached to a common frame which further includes a common printed circuit board 330. This ensures that the optical axis of each of these subimagers 212 is parallel and extends perpendicular to the incoming beam 105 in the illustrated parallel beam example of Fig. 2A.

Fig. 2B schematically shows an embodiment of an arrangement of the subimagers 212 of an X-ray image detection system 122. This embodiment functions in a cone beam configuration, for example of X-rays generated by a laboratory source.

In this example, the scintillator 210 is curved. The surface of the scintillator 210 is thus perpendicular to the local optical axis of the X-ray beam 105 striking the scintillator 210. Thus, in many embodiments, the scintillator 210 may have an approximated spherically curved surface that is curved in the plane of the figure (around the y axis) but also perpendicular to the plane of the figure (around the x axis). In the illustrated example, the scintillator 210 is piecewise curved, such that it is made from a series of planar sections. In other embodiments, however, the scintillator 210 may be continuously curved or possibly not even curved at all.

The subimagers 212-1, 212-2, 212-3 are arranged to capture the image from the respective subfields of view. In each case, the sub imager 212 is aligned to be generally perpendicular to the X-rays 105 that are received by the portion of the scintillator 210 that its subfield of view covers.

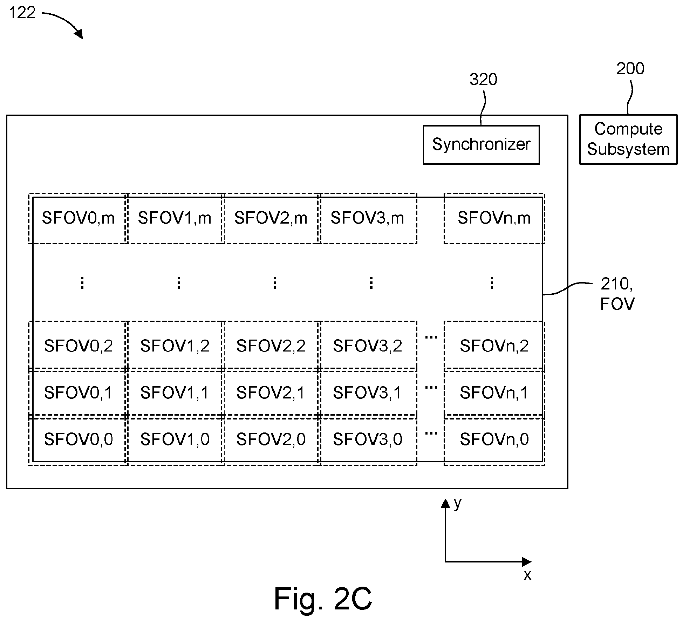

Fig. 2C shows how an array of subimagers 212 may be arranged to cover a scintillator/field of view 210. In the illustrated example, n by m sub imagers 212 are arrayed with their corresponding subfields of view SFOV. As shown, these sub fields of view from each of the sub imagers 212 overlap each other along both (x and y) axes to ensure that the entire scintillator 210 is imaged.

According to the disclosure, at least 2 subimagers are used such that n=1 and m=2 or n=2 and m=1. In other embodiments, at least 4 subimagers may be used, for instance two along each axis. Exemplary embodiments of the present disclosure feature numbers n and m of 4, 6 or 8 or more than 8 each, where n and m may take any combination of numbers and may equal or not equal.

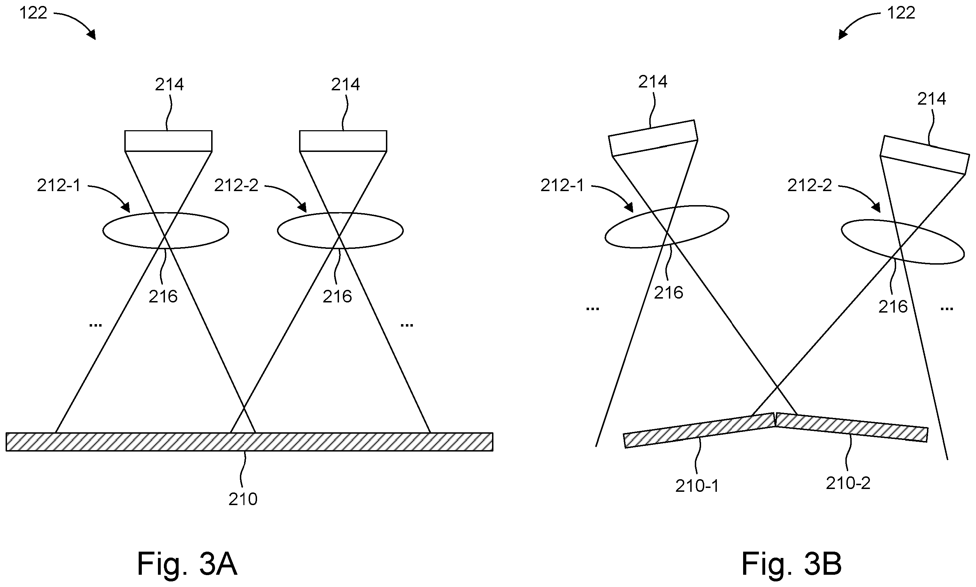

Figs. 3A shows exemplary embodiments of subimagers 212-1, 212-2 of the X-ray image detection system 122. Each sub imager 212 includes a single imaging lens, such as a camera lens 216, that forms an image from the corresponding sub field of view on the scintillator 210 on corresponding the sub imager's image sensor 214.

Figs. 3B represents exemplary embodiments of subimagers 212-1, 212-2 of the X-ray image detection system 122 for a cone beam. Here, each sub imager 212 includes an imaging lens 216 that forms an image from the corresponding sub field of view on the scintillator 210, comprising several sub scintillators 210-1, 210-2 on the sub imager's image sensor 214. In this case, the optical axes of the imaging lenses 216 and the image sensors 214 are angled such that their optical axes are locally perpendicular to the scintillator 210 (its respective sub scintillators) and also the X-rays from the corresponding sub field of view.

Preferably, each of the image sensors 214 has an arrangement of pixels of greater than 1k (1000) pixels in each axis for high spatial resolution of the captured images. For example, greater than 200 megapixels, such as five (5) or six (6) or greater GigaPixel sensors, could be used. For many applications, the pixel pitch of the image sensor 214 is between 1 and 3 micrometers, such as 2 micrometers. The overlap between adjacent sensors may be less than 10%, for example between 5% and 10% or less than 5%, in each axis of the sensor's pixel array. This allows for a trade-off between efficiency of the system while ensuring that the entire field of view of the scintillator 210 is captured by the plurality of subimagers 212. The f-number of the image lenses 216 may be less than five (5), such as 1, 2, 3 or 4, for meeting the requirements of spatial resolution, e.g. in X-ray microscopy applications.

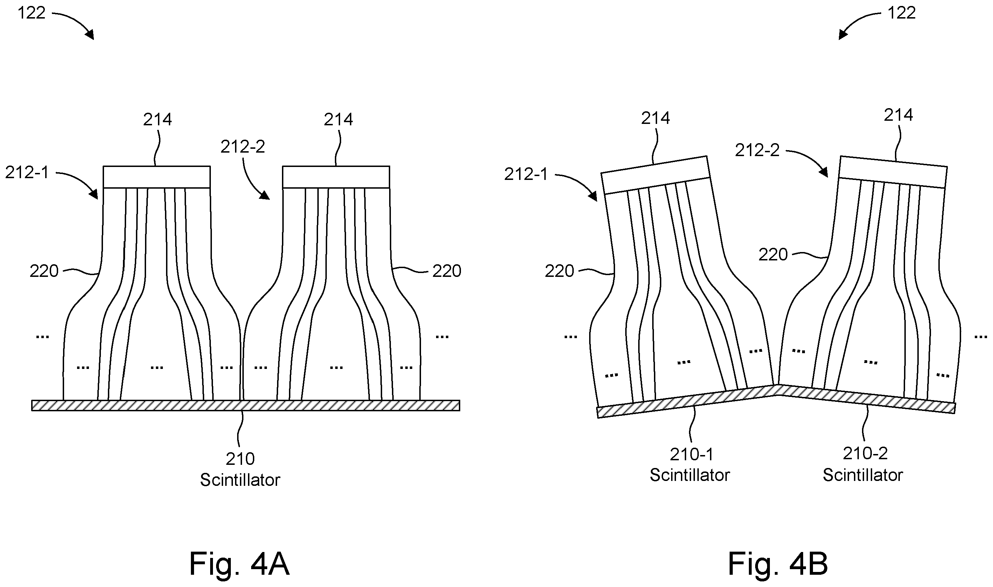

Fig. 4A show an embodiment of subimagers 212-1, 212-2 of an X-ray image detection system 122. Here, each sub imager 212 includes a tapered fiber optic plate 220 to relay the light from the scintillator 210 to the corresponding image sensor 214.

Fig. 4B shows an embodiment of subimagers 212-1, 212-2 of an X-ray image detection system 122 for a cone beam. Here each sub imager 212 includes a tapered fiber optic plate 220 that relays the image from the corresponding sub field of view on the scintillator 210 on the sub imager's image sensor 214. In this case, the optical axes of the tapered fiber optic plates 220 and the image sensors 214 are angled such that their optical axes are perpendicular to the scintillator 210 and also the X-rays locally.

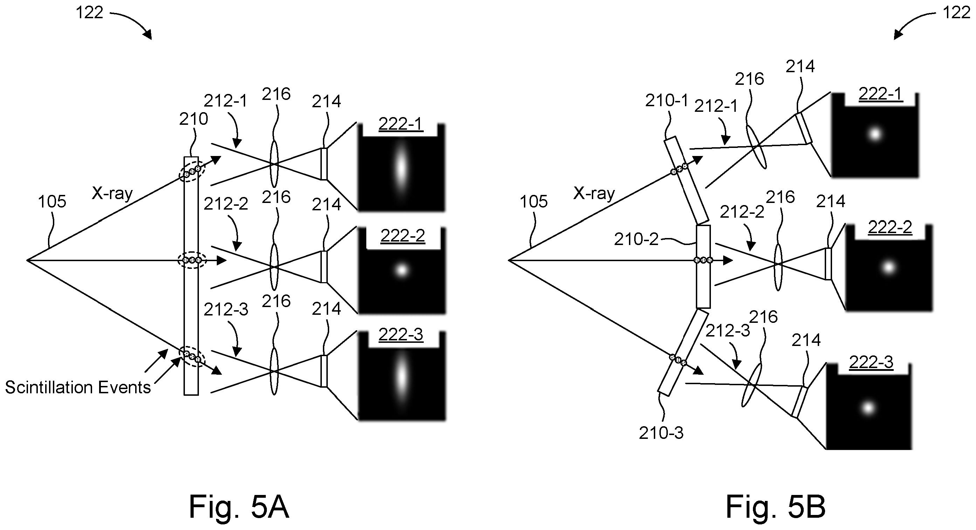

Figs. 5A and 5B illustrate improvements and advantages from curving the scintillator 210 and optical axes of the subimagers 212. As shown in Fig. 5A, scintillation events along the center axis of the beam 105 are on top of each other (on a line perpendicular to the surface of the scintillator 210) and thus yield a good spot image 222-2. Farther from the center axis, the scintillation events are distributed along the local X-ray beam paths and are smeared as shown in spot images 222-1, 222-3.

This problem is corrected as shown in Fig. 5B. The curvature of the scintillator 210 and the alignment of the subimagers 212 along the local axes of the X-rays 105 yield better spot patterns/transfer functions 222-1 to 222-3 across the system's field of view. This improves the high spatial resolution of the entire system and enhances the tomographic analysis of the sample 114.

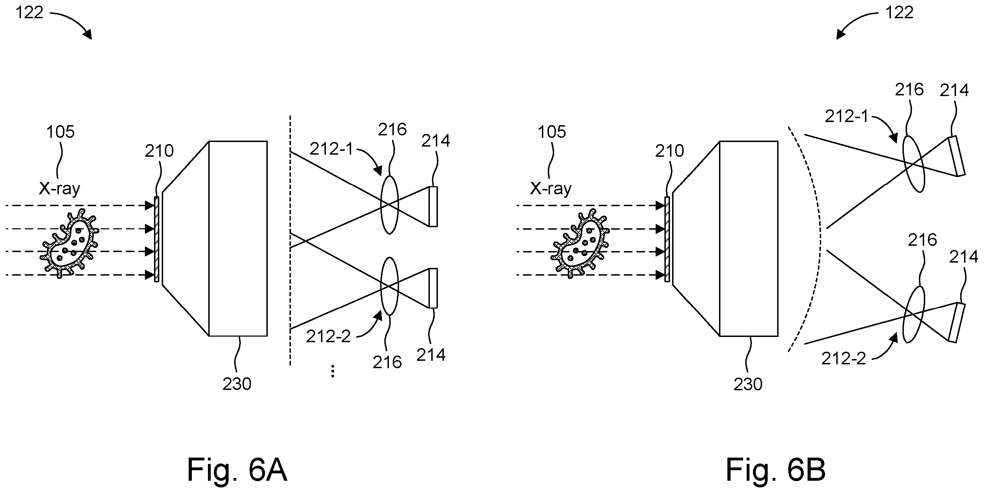

Figs. 6A and 6B schematically show arrangements of subimagers 212 of an X-ray image detection system 122.

These embodiments further add a large information-throughput primary objective lens 230 that relays the image on the scintillator 210 to the subimagers 212. Such an arrangement is applicable for close-to or sub-micrometer resolution X-ray imaging at larger FOV, improving the spatial resolution and enabling the placement of several subimagers 212 and their optical instrumentation. Fig. 6A shows an arrangement where the imaging plane of the primary objective lens 230 is flat, and Fig. 6B shows an arrangement where the imaging plane of the primary objective lens 230 is curved. The optical axes of the subimagers 212 are angled to match the curved image plane of the objective lens 230 to achieve the advantages indicated with Figs. 5A and 5B.

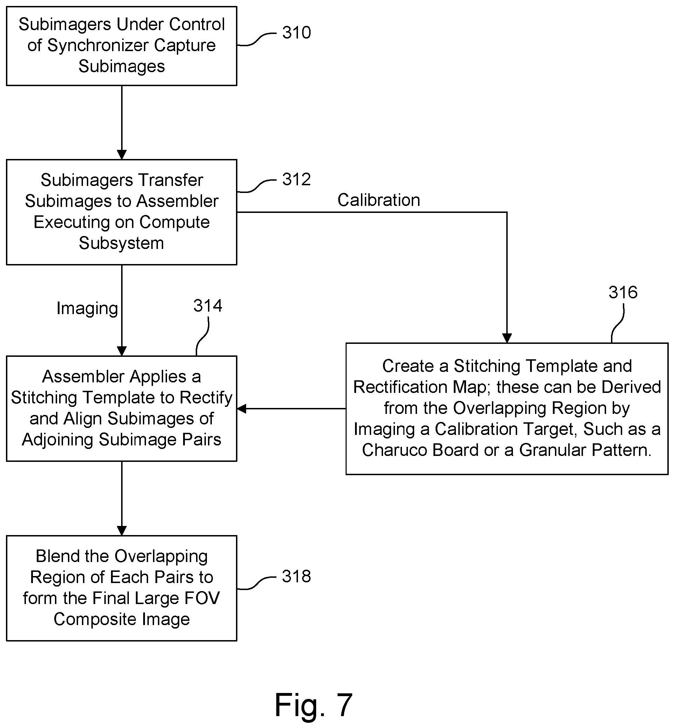

Fig. 7 is a flow diagram showing a method for capturing images with subimagers 212 and stitching the images into a composite image.

In step 310, subimagers 212 under control of a synchronizer 320 capture, preferably but necessarily simultaneously, subimages of their respective sub fields of view SFOV. A simultaneous acquisition of images allows for the entire field of view being captured at the same time. A non-simultaneous acquisition saves data transfer and material cost and may still maintain / enable high resolution imaging.

In step 312, the subimagers 212 transfer the subimages to an assembler 252 executing on a compute subsystem 200.

In a calibration branch, a stitching template and rectification map are created in step 316. It is performed during an initial calibration routine, e.g. by imaging a Charuco board or a known granular pattern. The stitching template and rectification map are preferably derived from the overlapping regions. In other embodiments, the stitching template and rectification map may be derived from the sample images themselves.

In step 314, the assembler 252 applies the stitching template and rectification map produced in the calibration branch to align and register adjoining subimage pairs within the overlapping region of each pair to yield the composite image covering the entire FOV. Thus, the calibration branch enables the reliable assembly of the entire composite image.

In addition, a distortion map is usually applied to each lens (i.e., subFOV) before the final stitching. This allows for the correction of optical effects distorting subimages and therefore would make the assembly of the entire composite image less reliable.

In step 318, the overlapping regions of each pair are blended or otherwise smoothed to form the final large FOV composite image.

While this disclosure has been particularly shown and described with references to preferred embodiments thereof, it will be understood by those skilled in the art that various changes in form and details may be made therein without departing from the scope of the invention encompassed by the appended claims.

### REFERENCE SIGNS

- 100: X-ray microscopy (XRM) system
- 102: X-ray source subsystem
- 103: polychromatic X-ray beam
- 105: modulated X-ray beam
- 107: base
- 110: object stage subsystem
- 112: object holder
- 114: sample or object of interest
- 118: detector subsystem
- 122: X-ray image detection system
- 150: precision 3-axis compound stage
- 152: theta stage
- 200: computer or compute subsystem
- 205: X-ray microscope
- 210: scintillator
- 212: subimager
- 214: image sensor
- 216: camera lens
- 220: tapered fiber optic plate
- 222: spot image
- 230: primary objective lens
- 250: data storage resources
- 252: composite projection assembler
- 262: operating system
- 265: dynamic memory
- 272: processor(s)
- 310: Subimagers Under Control of Synchronizer Capture Subimages
- 312: Subimagers Transfer Subimages to Assembler Executing on Compute Subsystem
- 314: Assembler Applies a Stitching Template to Rectify and Align Subimages of Adjoining Subimage Pairs
- 316: Create a Stitching Template and Rectification Map; these can be Derived from the Overlapping Region by Imaging a Calibration Target, Such as a Charuco Board or a Granular Pattern
- 318: Blend the Overlapping Region of Each Pairs to form the Final Large FOV Composite Image
- 320: synchronizer
- 330: printed circuit board

## Claims

1. An X-ray image detection system (122), comprising:
a scintillator (210) configured to receive X-rays (105) and convert the received X-rays (105) into light;
a plurality of subimagers (212), each subimager (212) comprising: an optical element configured to relay the light from a respective sub-field of view, SFOV, of the scintillator (210); and an image sensor (214) arranged to capture an optical image relayed by the optical element;
wherein the plurality of subimagers (212) is configured to collectively image the scintillator (210), wherein each subimager (212) is configured to capture a portion of the scintillator output.

2. The X-ray image detection system (122) of claim 1, wherein the sub-fields of view of adjacent subimagers (212) are overlapping.

3. The X-ray image detection system (122) of any one of claims 1 and 2, wherein each optical element comprises an imaging lens (216) or a tapered fiber optic plate (220).

4. The X-ray image detection system (122) of any one of claims 1 through 3, wherein each subimager (212) is oriented to have an optical axis perpendicular to the scintillator surface at the respective sub-field of view.

5. The X-ray image detection system (122) of any one of claims 1 through 4, wherein the scintillator (210) comprises a curved scintillator surface aligned generally perpendicular to incoming X-rays (105).

6. The X-ray image detection system (122) of any one of claims 1 through 5, further comprising a primary objective lens (230) configured to relay an image from the scintillator (210) to the plurality of subimagers (212).

7. The X-ray image detection system (122) of any one of claims 1 through 6, further comprising a synchronizer (320) configured to simultaneously trigger image capture by the plurality of subimagers (212) and to sequentially read out captured sub-images.

8. The X-ray image detection system (122) of any one of claims 1 through 7, wherein each image sensor (214) comprises a pixel array of at least 1000 pixels along each axis.

9. The X-ray image detection system (122) of any one of claims 1 through 8, wherein the subimagers (212) are mounted on a common support structure comprising a printed circuit board (330).

10. An X-ray microscopy system (100) including the X-ray image detection system (122) of any one of claims 1 through 9.

11. A method of capturing an X-ray image, comprising:
receiving, by a scintillator (210), X-rays (105);
emitting, by the scintillator (210), light;
imaging, by a plurality of subimagers (212), the emitted light as scintillator output, each subimager (212) capturing a respective portion of the scintillator output through a respective optical element onto a respective image sensor (214) as a subimage; and
assembling the subimages captured by the plurality of subimagers (212) into a composite image covering the scintillator (210).

12. The method of claim 11, wherein capturing the subimages from the plurality of subimagers (212) is synchronized such that the subimages are captured simultaneously.

13. The method of any one of claims 11 and 12, wherein assembling the subimages comprises stitching the captured subimages together and removing overlapping portions between adjacent subimages.

14. The method of any one of claims 11 through 13, wherein imaging the scintillator output comprises relaying the scintillator output through a respective imaging lens (216) or a respective tapered fiber optic plate (220) associated with each subimager (212) and/or through a primary objective lens (230) configured for high-resolution imaging.

15. The method of any one of claims 11 through 14, further comprising capturing subimages with sensors (214) having pixel pitches between 1 and 3 micrometers.
